# EUROPEAN PATENT SPECIFICATION

(11) **EP 4 168 465 B1**
(45) Date of publication and mention of the grant of the patent: **16.04.2025**
(21) Application number: 21730932.7
(22) Date of filing: 08.06.2021
(51) Int. Cl.: C08G 18/76, C08K 5/00, C08L 95/00

(54) **ASPHALT COMPOSITION COMPRISING A MIXTURE OF AN ISOCYANATE AND A PLASTICIZER AS PERFORMANCEADDITIVES**
ASPHALTZUSAMMENSETZUNG MIT EINER MISCHUNG AUS EINEM ISOCYANAT UND EINEM WEICHMACHER ALS LEISTUNGSADDITIVE
COMPOSITION D'ASPHALTE COMPRENANT UN MÉLANGE D'UN ISOCYANATE ET D'UN PLASTIFIANT EN TANT QU'ADDITIFS DE PERFORMANCE

(30) Priority: 19.06.2020 EP 20181004
(43) Date of publication of application: 26.04.2023
(73) Proprietor: BASF SE, 67056 Ludwigshafen am Rhein (DE)
(72) Inventor: SCHATZ, Waldemar, 49448 Lemfoerde (DE); ZEILINGER, Michael, 67056 Ludwigshafen (DE); BOKERN, Stefan, 49448 Lemfoerde (DE); WIEBELHAUS, Dag, 67056 Ludwigshafen (DE); OTERO MARTINEZ, Iran, 49448 Lemfoerde (DE)
(74) Representative: BASF IP Association
(86) International application number: PCT/EP2021/065228
(87) International publication number: WO 2021/254815

(56) References cited:
- WO-A1-2020/035403
- US-A1- 2010 056 674
- US-A1- 2011 034 593
- US-A1- 2015 240 082

## Description

This invention essentially relates to an asphalt composition comprising an isocyanate and a plasticizer selected from the group consisting of orthophthalates, terephthalates, cyclohexanoates, alkylsulfonates, adipates, and citrates or mixtures thereof

The present invention also relates to a process for the preparation of an asphalt composition and the use in an asphalt mix composition for pavement applications. The asphalt composition of the present invention shows an increase in the functional temperature range as for example the useful temperature range of the asphalt, increased elasticity and a lower potential of deformation, an improved asphalt mix workability / compactability of asphalt mix compositions with high RAP contents, an excellent rutting resistance and fatigue behavior and an improved low temperature performance (high crack resistance through enough elasticity).

In general asphalt is a colloidal material containing different molecular species classified into asphaltenes and maltenes. Asphalt being viscoelastic and thermoplastic suffers property variation over a range of temperatures, from extreme cold to extreme heat. Asphalt tends to soften in hot weather and crack in extreme cold. At cold temperatures, asphalts become brittle and are subject to crack while at elevated temperatures they soften and lose physical properties.

Pavements continually oxidize and age during their performance life, leading to durability issues as a result of increased stiffness and brittleness and lower ability to relax stress. Moreover, increasing the usage of reclaimed asphalt pavement (RAP) material to save primary resources and reduce CO₂ emissions necessitates the improvement of restoring the rheological and performance properties of asphalt binders, which contain high ratios of binder stemming from RAP, and corresponding asphalt mix compositions.

High contents of RAP material in asphalt mix compositions come along with many challenges. The processability of asphalt mix compositions is poor since aged asphalt binders due to oxidative aging processes show high softening points and are thus more viscous. Consequently, higher processing temperatures for such asphalt mix compositions are necessary. Moreover, when employing high amounts of brittle and stiff RAP material, the low temperature cracking resistance of according asphalt mix compositions suffers strongly. Improving the mentioned performance and rheological properties of asphalt binders, which contain high ratios of binder stemming from RAP, and corresponding asphalt mix compositions is highly desirable. Conventional state-of-the-art modifiers rejuvenate aged RAP asphalt (so called rejuvenators) i.e. the softening point is decreased, required compaction temperatures for asphalt mix compositions containing high RAP ratios is decreased (better workability / compactability) and low temperature cracking resistance of asphalt mix compositions with high RAP contents is increased. However, the high temperature performance i.e. rutting resistance and fatigue behavior of rejuvenated RAP asphalt mix compositions is not improved or is even decreased.

The addition of a thermosetting reactive component such as isocyanates as binders respectively in more general terms as modifier allows the physical properties of the asphalt to remain more constant over a range of temperatures and/or improve the physical properties over the temperature range the asphalt is subjected to.

Such asphalts that are modified by added binders respectively modifiers are known for years in the state of the art. But there is still a need in the asphalt industry, however, for improved asphalts. In part this is because currently known polymer-modified asphalts have a number of deficiencies. These include susceptibility to for instance permanent deformation (rutting), flexural fatigue, moisture, decrease of elasticity at low temperature operation.

WO 01/30911 A1 discloses an asphalt composition comprising, by weight based on the total weight of the composition, about 1 to 8 %, of a polymeric MDI, where the polymeric MDI has a functionality of at least 2.5. It also relates to a process for preparing said asphalt composition, using reaction times of below 2 hours. The formation of the product MDI-asphalt is measured by an increase in the product's viscosity or more preferably by dynamic mechanical analysis (DMA).

WO 01/30912 A1 discloses an aqueous asphalt emulsion comprising, besides asphalt and water, an emulsifiable polyisocyanate. It also relates to an aggregate composition comprising said emulsion, and to processes for preparing said compositions

WO 01/30913 A1 discloses an asphalt composition comprising, by weight based on the total weight of the composition, about 1 to 5 %, of a polymeric MDI based prepolymer, where the polymeric MDI has a functionality of at least 2.5. It also relates to a process for preparing said asphalt composition.

EP 0 537 638 B1 discloses polymer modified bitumen compositions which contain 0.5 to 10 parts by weight of functionalized polyoctenamer to 100 parts by weight of bitumen and, optionally, crosslinking agents characterized in that the polyoctenamer is predominantly a trans-polyoctenamer and contains carboxyl groups, as well as groups derived therefrom for example maleic acid.

US 2015/0191597 A1 discloses asphalt binder compositions comprising asphalt and a polymer blend, wherein the polymer blend comprises oxidized high density polyethylene and another polymer chosen from: maleated polypropylene, polyethylene homopolymer, high crystallinity polyethylene, and combinations thereof. It has been found that the addition of certain blends of polymers to asphalt binder compositions broadens the PG range and increases the UTI of the asphalt binder compositions.

WO 2018/228840 A1 discloses the modification of asphalt binders with thermosetting reactive compounds leading to a crosslinking of binder constituents and generating a strong elastic polymeric network, showing improved physical properties with maintained low temperature properties.

Consequently, it would be highly desirable to have an asphalt composition and a related preparation process at hand which could avoid all the disadvantages associated with the prior art, for example limited elastic properties, low rutting resistance, limited fatigue behavior, limited useful temperature interval and a poor workability of asphalt mix compositions with high RAP amounts.

One of the objects of the present invention was to provide an asphalt composition and an asphalt mix composition showing improved physical properties in terms of an excellent rutting resistance and fatigue behavior, an improved low temperature performance, high crack resistance through enough elasticity and an improved asphalt mix workability of asphalt mix compositions with high RAP contents. Furthermore, a respective asphalt composition and asphalt mix composition preparation process was to be provided.

The different physical properties of the asphalt composition are measured by different tests known in the art and described in detail in the experimental section.

It is to be understood that the terminology used hereafter is not intended to be limiting, since the scope of the presently claimed invention will be limited only by the appended claims. Moreover, the following examples used when defining the terms are to be understood that the definition of the respective term is not limited by the given example(s).

### Asphalt / bitumen / asphalt binder / asphalt composition

According to the present invention, the terms "asphalt", "bitumen", "asphalt binder", and "asphalt composition" are used equivalently. In general, asphalt is a colloidal material containing different molecular species classified into asphaltenes and maltenes.

Asphalt / bitumen / asphalt binder / asphalt composition may be unmodified or modified. Unmodified asphalt / bitumen / asphalt binder / asphalt composition or also called paving grade bitumen / paving grade asphalt (binder) may for example be a penetration grade (=pen grade) 50/70 or 70/100 (needle penetration determined according to DIN EN 1426). Modified asphalt compositions may for example be polymer modified bitumen (PmB). The respective polymer may be selected from the group consisting of thermoplastic elastomers, latex, thermoplastic polymers, thermosetting polymers, and mixtures of two or more thereof. A thermoplastic elastomer may for example be styrene butadiene elastomer (SBE), styrene butadiene styrene (SBS), or styrene butadiene rubber (SBR). An example of an SBS modified bitumen is a PmB 25/55-55 RC.

### Granular material / aggregates

According to the present invention, the term "granular material" is similarly used to describe a component that may also be described as an "aggregate" or as "aggregates". Further, in accordance with the present invention, a granular material or an aggregate may comprise one or more of gravel, sand, filler, and fine aggregates. Additional specific and/or preferred embodiments are disclosed herein in this regard.

### Reclaimed asphalt pavement

According to the present invention, the terms "reclaimed asphalt pavement" (also abbreviated as RAP), "recycled asphalt", "reclaimed asphalt", "reclaimed asphalt pavement material", and "reclaimed asphalt mix" are similarly used to describe a material that may also be described as "reprocessed pavement containing asphalt and aggregates".

### Asphalt mix composition / asphalt mix

According to the present invention, the terms "asphalt mix composition" and "asphalt mix" are used to describe a mixture of aggregates / granular material, reclaimed asphalt, any kind of additives (e.g. thermosetting reactive compounds, fibers, rejuvenators, reactive modifiers, plasticizers, waxes, surfactants, etc.), and asphalt / bitumen / asphalt binder / asphalt compositions (modified or unmodified).

### Recovered asphalt / recovered bitumen / recovered asphalt binder

According to the present invention, the term "recovered asphalt" or "recovered bitumen" or "recovered asphalt binder" is used to describe asphalt / bitumen / asphalt binder which is extracted from asphalt mix compositions. The respective recovery procedure is described below.

Elastic response and non-recoverable creep compliance (Jnr) are computed in in the Multiple Stress Creep Recovery (MSCR) test in which the asphalt is subjected to a constant load for a fixed time. The total deformation for a specific period of time is given in % and correspond to a measure of the elasticity of the binder.

A Bending Beam Rheometer (BBR) is used to determine the stiffness of asphalt at low temperatures and usually refer to flexural stiffness of the asphalt. These parameters give an indication of an asphalt binder's ability to resist to low temperature cracking. The BBR is used to determine an asphalt binder's low temperature grade.

Accordingly, an asphalt composition was found comprising 0.1 to 8 wt.-% based on the total weight of the composition of an Isocyanate as thermosetting reactive compound and 0.1 to 8 wt.-% based on the total weight of the composition of a plasticizer selected from the group consisting of orthophthalates, terephthalates, cyclohexanoates, alkylsulfonates, adipates, and citrates or mixtures thereof..

According to a further aspect of the invention there is provided a process for the preparation of an asphalt composition comprising the following steps:
a) Heating up the starting asphalt to a temperature of from 110 to 190°C
b) Adding the desired amount of isocyanate and the respective plasticizer in the desired amount, wherein the order of adding the desired additives is not decisive or the respective isocyanate and the respective plasticizer are separately mixed and added as mixture.
c) After step b) the reaction mixture is stirred for at least 2 h at a temperature in the range of from 110 to 190°C or homogenized for a duration in the range of from 2 to 180 s and optionally
d) the end of the reaction is determined by IR spectroscopy,
   wherein the reaction is under an oxygen atmosphere.

Which fulfills the objects of the invention. In addition, there is provided the use of an asphalt composition for the preparation of an asphalt mix composition and the use of an asphalt mix composition in pavement applications.

Surprisingly, it could be found that an asphalt composition comprising a combination of isocyanate and plasticizer according to the invention and the related asphalt mix composition is showing an increased rutting resistance, an improved fatigue behavior, better elastic properties combined with an improved low temperature behavior. In contrast to state-of-the art rejuvenators, the invention delivers a better rutting and fatigue behavior of asphalt mix compositions containing high RAP ratios in addition: i) the softening point of the binder blend containing a high ratio of strongly aged binder from RAP is decreased, ii) compaction temperatures of the corresponding asphalt mix composition with a high RAP content can be decreased and the workability of the mix is improved, iii) low temperature cracking resistance of the corresponding asphalt mix is improved.

Without being bound to this theory it is presently believed that this is due to the different reaction of the isocyanate as thermosetting reactive compound and the plasticizer with the different molecular species classified into asphaltenes and maltenes of the respective asphalt. A specific morphology of colloid structures is needed to obtain the resulting performances. A thermosetting reactive compound will react with the phenolic, carboxylic, thiol, anhydride and/or pyrrolic group or any reactive group from the asphalt components and link the asphaltenes together, leading to larger particles in the resulting asphalt composition. In addition to that the plasticizer will modify the maltene phase supporting the formation of an improved colloidal structure of the modified asphalt resulting in a not to be expected performance especially in terms of an improved low temperature cracking resistance of the corresponding asphalt mix and an improved workability of the mix with a high RAP content. Due to the increased stability, this may for example offer the opportunity of reducing the dimension of subbase layers where typically high amounts of RAP are used. This leads to cost and material savings and reduced CO₂ emissions.

Preferred embodiments are explained in the claims and the specification. It is understood that combinations of preferred embodiments are within the scope of the present invention.

According to the invention, the asphalt composition comprises an isocyanate as thermosetting reactive compound and 0.1 to 8 wt.-% based on the total weight of the composition of a plasticizer selected from the group consisting of orthophthalates, terephthalates, cyclohexanoates, alkylsulfonates, adipates, and citrates or mixtures thereof.

Generally, an asphalt used in the present invention can be any asphalt known and generally covers any bituminous compound. It can be any of the materials referred to as bitumen, asphalt binder or asphalt. For example distillate, blown, high vacuum and cut-back bitumen, and also for example asphalt concrete, cast asphalt, asphalt mastic and natural asphalt. For example, a directly distilled asphalt may be used, having, for example, a penetration of 80/100 or 180/220. For example, the asphalt can be free of fly ash.

Preferably the asphalt has a penetration of 20-30, 30-45, 35-50, 40-60, 50-70, 70-100, 100-150, 160-220, 250-330 or performance grades of 52-16, 52-22, 52-28, 52-34, 52-40, 58-16, 58-22, 58-28, 58-34, 58-40, 64-16, 64-22, 64-28, 64-34, 64-40, 70-16, 70-22, 70-28, 70-34, 70-40, 76-16, 76-22, 76-28, 76-34, 76-40, more preferably the asphalt has a penetration of 30-45, 35-50, 40-60, 50-70, 70-100, 100-150, 160-220 or performance grades of 52-16, 52-22, 52-28, 52-34, 52-40, 58-16, 58-22, 58-28, 58-34, 58-40, 64-16, 64-22, 64-28, 64-34, 70-16, 70-22, 70-28, 76-16, 76-22, most preferably the asphalt has a penetration 40-60, 50-70, 70-100, 100-150 or performance grades of 52-16, 52-22, 52-28, 52-34, 52-40, 58-16, 58-22, 58-28, 58-34, 64-16, 64-22, 64-28, 70-16, 70-22, 76-16, 76-22.

Generally, a thermosetting reactive compound is a compound which could chemically react with the different molecular species classified into asphaltenes and maltenes of the respective asphalt and helps to generate a specific morphology of colloid structures resulting in physical properties of the asphalt to remain more constant over a broad range of temperatures and / or even improve the physical properties over the temperature range the asphalt is subjected to.

According to the invention the amount of an isocyanate as thermosetting reactive compound in the asphalt composition is not more than 8.0 wt.% based on the total weight of the asphalt composition. Preferably not more than 5.0 wt.%, more preferably not more than 4.0 wt.%, most preferably not more than 3.0 wt.%, based on the total weight of the asphalt composition. According to the invention, the amount of an isocyanate as thermosetting reactive compound in the asphalt composition is at least 0.1 wt.%, preferably at least 0.5 wt.%, more preferably at least 0.7 wt.%, most preferably at least 0.9 wt.% based on the total weight of the asphalt composition. For example the amount of an isocyanate as thermosetting reactive compound in the asphalt composition can be in the range of from 0.5 wt.% to 3.8 wt.%, in the range of from 0.8 wt.% to 2.7 wt.%, in the range of from 1.0 wt.% to 3.9 wt.%, in the range of from 1.1 wt.% to 2.0 wt.%, in the range of from 1.8 wt.% to 3.2 wt.%, in the range of from 2.1 wt.% to 3.7 wt.%, or in the range of from 0.5 wt.% to 3.5 wt.%.

The isocyanate as thermosetting reactive compound according to the invention can be any isocyanate, provided it is compatible with the asphalt, preferably it is Toluene diisocyanate (TDI), Hexamethylene diisocyanate (HDI), polymeric MDI, monomeric MDI, MDI prepolymers, more preferably it is TDI, polymeric MDI, monomeric MDI, most preferably it is polymeric MDI, monomeric MDI, for example polymeric MDI.

Generally, TDI is known in the art and is known as Toluene diisocyanate (TDI) it is an organic compound which occurs in different isomers. According to the invention any of the known isomers or mixtures of different isomers of TDI can be used, provided it is compatible with the asphalt. Preferably it is pure 2,4- TDI or a mixture of 2,4 and 2,6 TDI, more preferably it is a mixture of 2,4 and 2,6 -TDI isomers, for example a 80/20 or 65/35 mixture of the 2,4 and 2,6-TDI isomers.

Generally, HDI is known in the art and is known as Hexamethylene diisocyanate (HDI) which is an aliphatic diisocyanate. According to the invention any of the known HDI's can be used, provided it is compatible with the asphalt.

Generally, MDI prepolymer is known in the art and is the reaction product of polymeric MDI with a polyol. The polymeric MDI as one part of the MDI prepolymer is known in the art and is known as polymethylene polyphenylene polyisocyanate and is also referred to as polyarylene polyisocyanate or polyphenylmethane poly-isocyanate. It may comprises varying amounts of isomers like for example 4,4'-, 2,2'- and 2,4'-isomers. Preferably the amount of 4,4'MDI isomers is in the range of from 26% to 98%, more preferably in the range of from 30% to 95%, most preferably in the range of from 35% to 92%. Preferably the 2 rings content of polymeric MDI is in the range of from 20 to 62, more preferably in the range of from 26 % to 48 %, most preferably in the range of from 26% to 42%. It can also comprise modified variants containing carbodiimide, uretonimine, isocyanurate, urethane, allophanate, urea or biuret groups. This all will be referred to in the following as pMDI. The polyol that is used to prepare the prepolymer is any polyol that can be used in the instant field, provided it is compatible with the asphalt. One can use any high molecular weight polyol used in the invention may be any of the polyols, or mixtures thereof, used in the manufacture of polyurethanes, having an average hydroxyl equivalent weight of at least 50, preferably from 50 to 10000, more preferably from 500 to 5000. These polyols can be polyether polyols, polyester polyols, polyesteramides polyols, polythioether polyols, polycarbonate polyols, polyacetal polyols, polyolefin polyols, and the like. Preferred polyols are polyether (especially polypropyleneglycol), polyester (especially aromatic polyesters), and polyolefin (especially polybutadiene) polyols. The functionality of the polyol is preferably 2-4, more preferably 2-3 and most preferably 2. One particularly preferred polyol is Polypropyleneglycol (PPG), for example PPG 2000. Processes known to those skilled in the art can be used to produce the prepolymer. The NCO value of the prepolymer can vary within broad limits. It can be from about 6 to 30, preferably from about 9 to 25. The ratio polyol/pMDI can in fact vary from 2/98 to 80/20 weight ratio.

Generally, polymeric MDI is known in the art and is known as polymethylene polyphenylene polyisocyanate and is also referred to as polyarylene polyisocyanate or polyphenylmethane polyisocyanate. It may comprise varying amounts of isomers like for example 4,4'-, 2,2'- and 2,4'-isomers. Preferably the amount of 4,4'MDI isomers is in the range of from 26% to 98%, more preferably in the range of from 30% to 95%, most preferably in the range of from 35% to 92%. Preferably the 2 rings content of polymeric MDI is in the range of from 20 to 62, more preferably in the range of from 26 % to 48 %, most preferably in the range of from 26% to 42%. It can also comprise modified variants containing carbodiimide, uretonimine, isocyanurate, urethane, allophanate, urea or biuret groups. This all will be referred to in the following as pMDI. Preferably the pMDI used according to the invention has an average isocyanate functionality of at least 2.3, more preferably of at least 2.5, most preferably of at least 2.7, for example 2.8, 2.9 or 3.0.

Generally, the purity of the polymeric MDI is not limited to any value, preferably the pMDI used according to the invention has an iron content of from 1 to 100 ppm, more preferably of from 1 to 70 ppm, most preferably of from 1 to 60 ppm

Generally, monomeric MDI (mMDI) is known in the art and is known as methylene diphenyl diisocyanate. It may occur in form of different isomers like for example 4,4'-, 2,2'- and 2,4'-isomers . According to the invention any of the known isomers or mixtures of different isomers of mMDI can be used, provided it is compatible with the asphalt. Preferably it is pure 4,4'- MDI, a mixture of 2,4'-MDI and 4,4'-MDI, a mixture of 2,4'-MDI and 4,4'-MDI with reduced 2,2'-MDI content, more preferably it is pure 4,4'- MDI, a mixture of 2,4'-MDI and 4,4'-MDI, most preferably it is pure 4,4'- MDI. Preferably the amount of 4,4'MDI isomers is in the range of from 40 to 99.5%, more preferably in the range of from 44% to 99%, most preferably in the range of from 46 % to 98.5%.

It can also comprise modified variants containing carbodiimide, uretonimine, isocyanurate, urethane, allophanate, urea or biuret groups. This all will be referred to in the following as mMDI. Preferably the mMDI used according to the invention has an average isocyanate functionality of at least 2.0, more preferably of at least 2.1, most preferably of at least 2.15, for example 2.2, 2.3 or 2.4.

Generally, plasticizers are additives that increase the plasticity or decrease the viscosity of a material and alter their physical properties. They decrease the attraction between polymer chains to make them more flexible. According to the invention any of the known plasticizers can be used, provided it is compatible with the asphalt.

Preferably the plasticizer is selected from the group consisting of orthophthalates, terephthalates, cyclohexanoates, alkylsulfonates, adipates, and citrates or mixtures thereof.

Preferred orthophthalates may be (DINP) Diisononyl phthalate, (DIDP) Diisodecyl phthalate, (DPHP) Bis(2-propylheptyl)phthalate, (DEHP) Bis(2-ethylhexyl)phthalate, (DBP) Dibutyl phthalate, (DIBP) Diisobutyl phthalate, (BBP) Benzylbutyl phthalate or mixtures thereof. The most preferred orthophthalates may be (DINP) Diisononyl phthalate.

Preferred terephthalates may be (DEHTP) Bis(2-ethylhexyl)terephthalate, (DBT) Diisobutyl terephthalate or mixtures thereof.

The most preferred terephthalate may be (DEHTP) Bis(2-ethylhexyl)terephthalate.

The most preferred cyclohexanoate may be (DINCH) 1,2-Cyclohexane dicarboxylic acid diisononyl ester.

The most preferred alkylsulfonate may be (C10-C21)-Alkylsulfonic acid ester of phenol.

Preferred adipates may be (DEHA) Diethylhexyl adipate (Bis(2-ethylhexyl) adipate), (DINA) Diisononyl adipate (Bis(7-methyloctyl) adipate), (DIDA) Diisodecyl adipate or mixtures thereof. The most preferred adipates may be (DINA) Diisononyl adipate (Bis(7-methyloctyl) adipate).

Preferred citrates may be (ATBC) Acetyl tributyl citrate, (TBC) Tributyl citrate, (TEC) Triethyl citrate or mixtures thereof.

The most preferred citrates may be (ATBC) Acetyl tributyl citrate.

Preferably the plasticizer is selected from the group consisting of Diisononyl phthalate, Diisodecyl phthalate, Bis(2-propylheptyl)phthalate, Bis(2-ethylhexyl)phthalate, Bis(2-ethylhexyl)terephthalate, Dibutyl phthalate, Diisobutyl phthalate, Benzylbutyl phthalate, Diisobutyl terephthalate, Diisononyl 1,2-cyclohexanedicarboxylic acid and (C10-C21)-Alkylsulfonic acid ester of phenol or mixtures thereof.

More preferably the plasticizer is selected from the group consisting of Bis(2-ethylhexyl)terephthalate, (C10-C21)-Alkylsulfonic acid ester of phenol and Diisononyl 1,2-cyclohexanedicarboxylic acid or mixtures thereof.

Most preferably the plasticizer is Diisononyl 1,2-cyclohexanedicarboxylic acid (DINCH).

According to the invention the amount of a plasticizer or a mixture of plasticizers in the asphalt composition is not more than 8.0 wt.% based on the total weight of the asphalt composition. Preferably not more than 5.0 wt.%, more preferably not more than 4.0 wt.%, most preferably not more than 3.0 wt.%, based on the total weight of the asphalt composition. According to the invention, the amount of a plasticizer or a mixture of plasticizers in the asphalt composition is at least 0.1 wt.%, preferably at least 0.5 wt.%, more preferably at least 0.7 wt.%, most preferably at least 0.9 wt.% based on the total weight of the asphalt composition. For example the amount of a plasticizer or a mixture of plasticizers in the asphalt composition can be in the range of from 0.5 wt.% to 3.8 wt.%, in the range of from 0.8 wt.% to 2.7 wt.%, in the range of from 1.0 wt.% to 3.9 wt.%, in the range of from 1.1 wt.% to 2.0 wt.%, in the range of from 1.8 wt.% to 3.2 wt.%, in the range of from 2.1 wt.% to 3.7 wt.%, or in the range of from 0.5 wt.% to 3.5 wt.%.

Further optional additives known in the art may be added to the composition according to the invention in order to adapt the properties of the asphalt composition depending on the respective application. Additives may be for example waxes. These waxes if used as an additional additive in the asphalt binder composition may be functionalized or synthetic waxes, or naturally occurring waxes. Furthermore, the wax may be oxidized or non-oxidized. Non-exclusive examples of synthetic waxes included ethylene bis-stearamide was (EBS), Fischer-Tropsch wax (FT), oxidized Fischer-Tropsch wax (FTO), polyolefin waxes such as polyethylene wax (PE), oxidized polyethylene wax (OxPE), polypropylene wax, polypropylene/polyethylene wax alcohol wax, silicone wax, petroleum waxes such as microcrystalline wax or paraffin, and other synthetic waxes. Non-exclusive examples of functionalized waxes include amine waxes, amide waxes, ester waxes, carboxylic acid waxes, and microcrystalline waxes. Naturally occurring waxes may be derived from a plant, from an animal, or from a mineral, or from other sources. Non exclusive examples of natural waxes include plant waxes such as candelilla wax, carnauba wax, rice wax, Japan wax and jojoba oil; animal waxes such as beeswax, lanolin and whale wax; and mineral waxes such as montan wax, ozokerit and ceresin. Mixtures of the aforesaid waxes are also suitable, such as, for example, the wax may include a blend of a Fischer-Tropsch (FT) wax and a polyethylene wax.

Anti-oxidants may be used in conventional amounts as additional additives for the asphalt binder compositions to prevent the oxidative degradation of polymers that causes a loss of strength and flexibility in these materials.

Conventional amounts with regard to the optional additives are in the range of from 0.1 to 5 wt.-% based on the total amount of the respective asphalt composition. For example conventional amounts are 0.2 to 3 wt.-%, 0.5 to 2.8 wt.-% or 0.6 to 2.5 wt.-%.

Generally, the amount of isocyanate as thermosetting reactive compound and the amount of plasticizer may depend on the composition of the respective asphalt. For hard asphalt having a needle penetration below 85 less thermosetting reactive compound for example pMDI may be needed and for soft asphalt having a needle penetration above 85 a larger amount of the respective thermosetting reactive compound for example pMDI may be needed. Without being bound to this theory it is presently believed that the amount of the thermosetting reactive compound needs to be readjusted due to the different concentration of asphaltene in different asphalts. In soft asphalts which corresponds to a needle penetration above 85, asphaltenes are diluted, hence lower concentrated, which require a larger amount of the respective thermosetting reactive compound for example pMDI and more oxidation, which can be supplied by the oxygen atmosphere of the preparation process of an asphalt composition, to achieve better performance. The same can be imagined for the maltene phase of the respective asphalt with which the respective polymer are believed to interact.

Generally, for asphalt having a needle penetration below 85 which corresponds to a performance grade having a high temperature limit of at least 64, the amount of the isocyanate as thermosetting reactive compound selected from the group consisting of polymeric MDI, epoxy resins and melamine formaldehyde resins in the asphalt composition can be in the range of from 0.1 to 3.0 wt % preferably the amount of the thermosetting reactive compound is not more than 2.5 wt %, most preferably not more than 2.3 wt %, particularly not more than 2.0 wt % and the amount of the thermosetting reactive is at least 0.1 wt.%, preferably at least 0.5 wt.%, more preferably at least 0.7 wt.%, most preferably at least 1.0 wt.% based on the total weight of the asphalt composition.

Generally, for asphalt having a needle penetration above 85 which correspond to a performance grade having a high temperature limit of 64 or below, the amount of the thermosetting reactive compound selected from the group consisting of polymeric MDI, epoxy resins and melamine formaldehyde resins in the asphalt composition can be in the range of from 2.0 wt.% to 10.0 wt %, preferably the amount of the thermosetting reactive compound is not more than 5.0 wt %, most preferably not more than 4.5 wt %, particularly not more than 4.0 wt % and the amount of the thermosetting reactive is at least 2.0 wt.%, preferably at least 2.5 wt.%, more preferably at least 2.7 wt.%, most preferably at least 3.0 wt.% based on the total weight of the asphalt composition.

In addition to the above described also the amount of plasticizer can be adjusted in response to the characteristics of the used asphalt. The weight percent ratio of isocyanate as thermosetting reactive compound to plasticizer can be in the range of from 80:1 to 1:80, preferably in the range of from 10:1 to 1:10, more preferably in the range of from 5: 1 to 1:5, most preferably in the range of from 3:1 to 1:3, for example 2:1 to 1:2 or 1:1.

Generally, by modifying an asphalt the performance in terms of different physical properties may be improved for example an increased elastic response can be achieved.

The combination of isocyanate and plasticizer as additive in an asphalt resulting in a synergetic effect, which means that an asphalt comprising the combination of isocyanate and plasticizer surprisingly shows much better performance, than an asphalt comprising each individual component alone.

The asphalt compositions of the present invention can be used as any classical asphalt compositions of the prior art. The asphalt compositions of the invention can notably be useful for the production of:
- paints and coatings, particularly for waterproofing,
- mastics for filling joints and sealing cracks
- grouts and hot-poured surfaces for surfacing of roads, aerodromes, sports grounds, etc.
- in admixture with stone to provide aggregates (comprising about 5-20% of the asphalt composition) e.g asphalt mix
- hot coatings for surfacing as above
- surface coatings for surfacing as above
- asphalt emulsions
- warm mix asphalt (WMA)
- hot mix asphalt (HMA)

Furthermore, the present invention relates to a process for the preparation of an asphalt composition according to the invention, comprising the following steps
a) Heating up the starting asphalt to a temperature of from 110 to 190°C
b) Adding the desired amount of isocyanate and the respective plasticizer in the desired amount, wherein the order of adding the desired additives is not decisive or the respective isocyanate and the respective plasticizer are separately mixed and added as mixture.
c) After step b) the reaction mixture is stirred for at least 2 h at a temperature in the range of from 110 to 190°C or homogenized for a duration in the range of from 2 to 180 s and optionally
d) the end of the reaction is determined by IR spectroscopy,
wherein the reaction is under an oxygen atmosphere.

For example, the process of the invention may be performed at a temperature of from 110 to 190 °C in step a) and or step c). Preferably the temperature is in the range of from 110 to 180°C, more preferably in the range of from 115 to 170 °C, most preferably in the range of from 120 to 165 °C, for example the temperature is in the range of from 121 to 162 °C.

Generally, the temperatures in step a), b) and step c) are in the range of from 110 to 190°C and may differ in every step. Preferably, the temperature in every of the three steps is the same and in the range of from 110 to 190 °C, more preferably the same and in the range of from 110°C to 170°C, most preferably the same and in the range of from 110°C to 165°C.

According to the invention in step b) of the process for the preparation of the asphalt composition, the desired amount of isocyanate as thermosetting reactive compound and the desired amount of plasticizer is added under stirring. The isocyanate may be added first and afterwards the desired amount of plasticizer or the other way around. The isocyanate and the plasticizer may be added at the same time under stirring or are added as a mixture. The desired amount can be in the range of from 0.1 to 8 wt.-% based on the total weight of the composition for both components.

Generally, the amount may also be determined by potentiometric titration in which the number of reactive groups in an asphalt will be determined and correlated to the equivalent weight of reactive groups of the respective thermosetting compound. Titration methods are known in the art.

Generally, asphalt from different suppliers differ in terms of composition depending on which reservoir the crude oil is from, as well as the distillation process at the refineries. However, the cumulated total amount of reactive group for the isocyanate as thermosetting reactive compound can be in the range of from 3,1 to 4,5 mg KOH / g.

For example, asphalt having a penetration index of 50-70 or 70-100 result in a stoichiometric amount for pMDI to be 0,8 to 1,2% by weight. A further excess of isocyanate will be used to react with the newly formed functionalities due to oxidation sensitivity of the asphalt components under elevated temperatures during the preparation of the asphalt composition.

According to the invention the process step c) is performed after step b). The reaction mixture is stirred at a temperature in the range of from 110 to 190°C for at least 2 h, preferably the mixing time is at least 2.1 h, more preferably the mixing time is at least 2.2 h, most preferably the mixing time is at least 2.5h. After stirring for at least 2 h at a temperature in the range of from 110 to 190°C the cross-linking reaction of the reactive groups of the thermosetting compound and the reactive groups of the asphalt as well as the crosslinking reaction by oxidation are completed. To complete the cross-linking reaction at least 2 h are necessary, preferably least 2.1 h, more preferably at least 2.2 h, most preferably at least 2.5h.

As an alternative the reaction mixture can be homogenized at a temperature in the range of from 110 to 190°C for a duration in the range of from 2 to 180 s, preferably for a duration of from 2 to 60s, more preferably for a duration of from 5 to 40 s, more preferably for a duration of from 8 to 30 s, more preferably for a duration of from 10 to 25 s, most preferably for a duration of from 12 to 20 s. Homogenization is achieved with the aid of one or more dynamic mixing elements, more preferably with the aid of one or more circulation pumps and/or high shear mixers and/or one or more stirrers and/or one or more screws, more preferably with the aid of one or more stirrers. During this homogenization process of the thermosetting reactive compound, the plasticizer, and the respective asphalt the cross-linking reaction of the reactive groups is only induced and not finalized.

The completion of the cross-linking reaction takes place in the process of producing the asphalt mix composition (2) in which the mixture of the respective asphalt and the thermosetting reactive compound and the plasticizer (1) is added to a granular material for example at a temperature in the range of from 110 to 240°C and again homogenized for a duration in the range of from 5 to 180 s. Such a process is known in the art and described in detail for example in EP 19198042.4. Due to the high surface area of the granular material the completion of the cross-linking reaction is faster than in the other alternative under stirring.

It is preferred that addition in (2) is achieved by injection of at least a portion of the mixture (1) into at least a portion of granular material. It is particularly preferred that addition in (2) is achieved by injection of at least a portion of the mixture (1) into at least a portion of granular material with the aid of a dosage pump.

It is preferred that homogenization in (2) is achieved with the aid of one or more dynamic mixing elements, more preferably with the aid of one or more stirrers and/or one or more screws, more preferably with the aid of a double shaft compulsory mixer (twin-shaft pugmill).

It is preferred that homogenization in (2) is conducted in a mixing device. It is particularly preferred that the mixing device is part of an asphalt mixing plant.

In the case where homogenization in (2) is conducted in a mixing device, it is preferred that the granular material is added to the mixing device prior to the addition of the asphalt mixture (1).

It is preferred that in (2), addition and homogenization are conducted simultaneously.

It is preferred that (c) and/or (2), more preferably (c) and (2), are conducted as a batch process or as a continuous process. It is particularly preferred that (c) and/or (2), more preferably (c) and (2), are conducted as a continuous process.

According to the invention the process for the preparation of an asphalt composition and the process of producing the asphalt mix composition (2), have to be performed under an oxygen atmosphere. Preferably the oxygen concentration in the oxygen atmosphere is in the range of from 1 to 21 Vol.-%, more preferably the oxygen concentration in the oxygen atmosphere is in the range of from 5 to 21 Vol.-%, most preferably the oxygen concentration in the oxygen atmosphere is in the range of from 10 to 21 Vol.-%, for example the process of the present invention is performed under air or under a saturated atmosphere of oxygen.

The process of the invention is not limited to a special asphalt as starting material which means that also commercially available polymer modified asphalt (PmA) can further be modified by the process of the present invention by adding an isocyanate as thermosetting compound and a polymer into a PmA or to dilute a PmA with a virgin bitumen and use this as starting material for the modification process according to the invention. It also may be that a commercially available PmA will be blended with a modified asphalt synthesized according to the process of the present invention.

Generally, the process is not limited to be performed in one reaction vessel for example a container. The respective asphalt may be reacted with an isocyanate as thermosetting reactive compound and a plasticizer in a first step under the conditions described above for example temperature 110°C to 190°C under oxygen. Then the asphalt can be cooled down, transferred to a different reaction vessel subsequent to the transfer heated up so that the total reaction time under oxygen is fulfilled.

Further, the present invention relates to a use of the asphalt composition for the preparation of an asphalt mix composition and the use for pavement applications.

It is preferred that the granular material provided for the asphalt mix composition using the asphalt composition according to the invention comprises from 5 to 100 weight-% of reclaimed asphalt pavement, based on 100 weight-% of the granular material, wherein more preferably the granular material comprises from 10 to 90 weight-%, more preferably from 15 to 80 weight-%, more preferably from 20 to 70 weight-%, more preferably from 25 to 60 weight-%, more preferably from 30 to 50 weight-%, and more preferably from 35 to 45 weight-% of reclaimed asphalt pavement, based on 100 weight-% of the granular material.

Examples of asphalt compositions according to the invention
Z1: 1.2 to 3.5 wt.-% based on the total weight of the composition of pMDI as thermosetting reactive compound and 1.5 to 3.2 wt.-% based on the total weight of the composition of DINCH.
Z2: 1.2 to 3.5 wt.-% based on the total weight of the composition of pMDI as thermosetting reactive compound and 0.5 to 2.2 wt.-% based on the total weight of the composition of Bis(2-ethylhexyl)terephthalate.
Z3: 1.0 to 2.0 wt.-% based on the total weight of the composition of pMDI as thermosetting reactive compound and 2.0 to 3.2 wt.-% based on the total weight of the composition of (C10-C21)-Alkylsulfonic acid ester of phenol.
Z4: 1.0 to 2.3 wt.-% based on the total weight of the composition of pMDI as thermosetting reactive compound and 0.5 to 1.5 wt.-% based on the total weight of the composition of DINCH
Z5: 1.2 to 3.5 wt.-% based on the total weight of the composition of mMDI as thermosetting reactive compound and 1.5 to 3.2 wt.-% based on the total weight of the composition of Bis(2-ethylhexyl)terephthalate
Z6: 1.2 to 3.5 wt.-% based on the total weight of the composition of mMDI as thermosetting reactive compound and 0.5 to 2.2 wt.-% based on the total weight of the composition of (C10-C21)-Alkylsulfonic acid ester of phenol.

### Examples and Comparative Examples

### Characterization methods

### a) Asphalt tests

### Softening Point ("ring and ball method") according to DIN EN 1427

Two horizontal disks of asphalt, cast in shouldered brass rings, are heated at a controlled rate in a liquid bath while each supports a steel ball. The softening point is reported as the mean of the temperatures at which the two disks soften enough to allow each ball, enveloped in asphalt, to fall a distance of 25 ± 0.4 mm.

### Rolling Thin Film Oven Test (RTFOT or RTFO test) according to DIN EN 12607-1

Asphalt is heated in cylindrical glass bottles in an oven for 75 min at 163 °C (8 bottles can be employed per run). The bottles are rotated at 15 rpm and heated air is blown into each bottle at its lowest point of travel at 4000 mL/min. The effects of heat and air are determined from changes in physical test values which are measured before and after the oven treatment. The RTFO test simulates aging during manufacturing (mixing), mix transportation and placement / laydown (= short term aging of asphalt binders).

### Pressure Aging Vessel (PAV) according to DIN EN 14769

A sample which experienced short term aging by the RTFO test is placed inside a standard stainless-steel pan and aged at a specified conditioning temperature (90 °C, 100 °C or 110 °C) for 20 h in a vessel pressurized with air to 2.10 MPa. The temperature is selected according to the grade of the asphalt binder (application). Finally, the sample is vacuum degassed. The test simulates aging during in-service life (long-term aging).

### Dynamic Shear Rheometer (DSR) according to DIN EN 14770, ASTM D7175

A dynamic shear rheometer test system consists of parallel plates, a means for controlling the temperature of the test specimen, a loading device, and a control and data acquisition system. It is used to determine rheological properties of asphalt binders. The complex shear modulus is an indicator of the stiffness or resistance of asphalt binder to deformation under load. The complex shear modulus and the phase angle define the resistance to shear deformation of the asphalt binder in the linear viscoelastic region.

### "Bitumen-Typisierungs-Schnell-Verfahren" (BTSV) - determination of BTSV temperature and BTSV phase angle

A 25 mm diameter asphalt binder test specimen is pressed between parallel metal plates at a defined frequency in a DSR device. One of the parallel plates is oscillated with respect to the other at, in this case, 1.59 Hz and angular deflection amplitudes. The temperature is increased with a constant rate of 1.2°C/min. The measurement is started at 20°C. Heating at a constant rate progresses until a complex modulus of 15 kPa is reached. The temperature and phase angle at this point is defined as the BTSV temperature (*T*_{BTSV}, [°C]; may alternatively be used instead of the softening point, since *T*_{BTSV} correlates well with the hardness of binders, i.e. hard binders feature high *T*_{BTSV} and soft binders feature low *T*_{BTSV}) and BTSV phase angle (*δ*_{BTSV}, [°]; is a measure for the elasticity of the binder, i.e. binders with low elastic properties like for example paving grade asphalt binders feature a high *δ*_{BTSV}, whereas modified binders like for example polymer modified asphalt binders feature a low *δ*_{BTSV}).

("Das Bitumen-Typisierungs-Schnell-Verfahren", Alisov et al., Straße und Autobahn, August 2018; "Modifzierung bestimmen", M. Sutor-Fiedler, Asphalt & Bitumen 05/2017)

### Determination of asphalt binder viscosity

A 25 mm diameter asphalt binder test specimen is pressed between parallel metal plates at a defined shear rate in a DSR device. At 150°C, the viscosity is determined at a shear rate of 10 1/s.

### Temperature Sweep according to DIN EN 14770

This test has the objective of measuring the complex shear modulus and phase angle for asphalt binders with a DSR device. An 8 or 25 mm diameter asphalt binder test specimen is pressed between parallel metal plates at a defined frequency and temperature. One of the parallel plates is oscillated with respect to the other at, in this case, 1.59 Hz and angular deflection amplitudes. The required amplitudes must be selected in a way that the testing is done within the region of linear behavior. This is repeated at 30 °C, 40 °C, 50 °C, 60 °C, 70 °C, 80 °C and 90 °C.

### Multiple Stress Creep Recovery Test (MSCRT or MSRC Test) according to DIN EN 16659, ASTM D7405

The MSCRT is employed to determine the presence of elastic response in an asphalt binder under shear creep and recover at two stress levels (0.1 and 3.2 kPa) at a specified temperature (60 °C). This is carried out with a DSR device. A 25 mm asphalt binder test specimen is set under a constant stress for 1 s, and then allowed to recover for 9 s. Ten creep and recovery cycles are run at 0.100 kPa creep stress followed by ten cycles at 3.200 kPa creep stress.

### Bending Beam Rheometer (BBR) according to DIN EN 14771, ASTM D6648

The mid-point deflection of a simply supported prismatic beam of asphalt binder subjected to a constant load applied to its mid-point is determined. A prismatic test specimen is placed in a controlled temperature fluid bath and loaded with a constant test load for 240 s. The test load (980 ± 50 mN) and the mid-point deflection of the test specimen are monitored versus time using a computerized data acquisition system. The maximum bending stress at the midpoint of the test specimen is calculated from the dimensions of the test specimen, the distance between supports, and the load applied to the test specimen for loading times of 8.0, 15.0, 30.0, 60.0, 120.0 and 240.0 s. The stiffness of the test specimen for the specific loading times is calculated by dividing the maximum bending stress by the maximum bending strain.

### b) Asphalt mix composition tests

### Cyclic Compression Test (CCT) - according to TP Asphalt-StB Teil 25 B1, DIN EN 12697-25:2016

The uniaxial cyclic compression test is used to determine the deformation behavior of asphalt mix specimens. In this test, the specimen is tempered for 150 ± 10 min at 50 ± 0.3 °C, which is the same temperature at which the test is carried out. After the tempering period, the specimen is set on the universal testing machine and loaded cyclically. Each cycle lasts 1.7 s, where the loading time is 0.2 s and the pause period is 1.5 s. The upper load applied is 0.35 MPa and the lower one is 0.025 MPa. The number of cycles and the deformation are recorded. The test ends either when 10,000 load cycles are completed or when the deformation is higher than 40 %.

Indirect Tensile Strength Test - according to TP Asphalt-StB Teil 23, DIN EN 12697-23:2003 By the indirect tensile strength test, the fatigue behavior of asphalt mix specimens is determined. This is done by loading a cylindrical specimen across its vertical diametral plane at a specified rate of deformation (in this case 50 ± 0.2 mm/min) and test temperature (in this case 20±2 °C). The peak load at failure is recorded and used to calculate the indirect tensile strength of the specimen.

Uniaxial Tensile Stress Test and Thermal Stress Restrained Specimen Test - according to TP Asphalt-StB Teil 46A (LTT = Low Temperature Tests) according to DIN EN 12697-46:2012 The uniaxial tensile stress test and thermal stress restrained specimen test are employed and carried out according to the European Standard EN 12697-46:2012 to determine the cold behavior of asphalt mix specimens:
i) Thermal Stress Restrained Specimen Test (TSRST): while the deformation of the specimen is restrained, the temperature is reduced by a prespecified cooling rate.
ii) Uniaxial Tensile Strength Test (UTST): in order to assess the risk of low-temperature cracking, the stress induced by thermal shrinkage is compared with the respective tensile strength.

Low-temperature cracking of asphalt mix compositions results from thermal shrinkage during cooling, inducing tensile stress in the asphalt mix. The low temperature behavior of pavement layers is mimicked by both tests.

### Wheel Tracking Test according to TP Asphalt-StB Teil 22 DIN EN 12697-22:2003

Deformation (rut) depth of an asphalt mix composition subjected to cycles of passes of a loaded rubber wheel under constant and controlled temperature conditions are determined by the wheel tracking test. Typically, 10,000 cycles are carried out at 50 °C.

### Compactability according to TP Asphalt-StB Teil 10 DIN EN 12697-10

The compactability of an asphalt mix composition is determined as follows: a Marshall specimen is prepared from an asphalt mix composition according to EN 12697-30 using 100 blows of compaction to each side of the specimen. The thickness change is measured after each blow. Thereafter, a mathematical formula is derived from the experimental results. The respective formula parameters allow a characterization of the compactability of the investigated asphalt mix composition.

### Recovery of asphalt binder from asphalt mix compositions (recovered asphalt / recovered asphalt binder)

With the help of an asphalt analyzer, around 3 kg of an asphalt mix composition is mixed with trichlorethylene. The aggregates are separated from the asphalt binder in a process that takes about 60 min. After the procedure is done, a solution of approximately 600 ml of trichlorethylene and asphalt is obtained. The solution is then distilled by partially immersing the rotating distillation flask of the rotary evaporator in a heated oil bath while the solution is subjected to a partial vacuum and a flow of air. This process has two phases. Phase 1 takes 60 min, is done at 90 °C, under 40 kPa of pressure and a rotating speed of 75 rpm. Phase 2 is done at 160 °C under 2 kPa and a rotating speed of 75 rpm. Depending on the type of asphalt binder and the asphalt binder content of the asphalt mix, between 100-150 g of asphalt binder is recovered to then be subjected to testing as required.

### a) Asphalt binder tests

### Preparation of long-term aged 50/70 asphalt binder and a mixture thereof with an unaged (neat) binder 70/100 with a mixing ratio of 75:25 by weight

2 kg long-term aged asphalt binder with a penetration grade of 50/70 was prepared by carrying out four subsequent RTFOT aging procedures, i.e. 4 x 75 min aging at 163°C (300 min in total), employing a neat asphalt binder with a penetration grade of 50/70. With one run (300 min @ 163 °C) 35 g +/- 0,5 g asphalt binder per bottle i.e. 8 x 35 g = 280 g long-term aged binder can be prepared. After completing the aging runs, all long-term aged samples were placed in a single can, heated to 120-140 °C and stirred shortly to achieve homogeneity.

1 kg of the homogenized long-term aged asphalt binder was blended with a neat asphalt binder having a penetration grade of 70/100. The mixing ratio was 75 : 25 (long-term aged : neat) by weight. Mixing was carried out at 120-140 °C under constant stirring for less than 1 min. The mixture was subsequently split into 120 g portions which served as samples for asphalt binder modifications.

### Preparation of mixture of Isocyanate and plasticizer:

For asphalt binder modifications, 500 g of a mixture of an isocyanate and plasticizer were prepared by mixing 150 g of polymeric diphenylmethane diisocyanate having an average isocyanate functionality of 2.7, designated in the following as "As20" with 350 g of a plasticizer (Diisononyl 1,2-cyclohexanedicarboxylic acid purchased as Hexamoll^{®} DINCH) at room temperature under short stirring. Mixtures of As20 and Hexamoll^{®} DINCH are denominated as "As20-DINCH mixtures" in the following.

General procedure for the preparation of modified asphalt binder compositions Asphalt binder modifications employing either an unaged (neat) 50/70 binder (Table 1, sample 2) or a 75:25 mixture (by weight) of a long-term aged 50/70 binder and an unaged (neat) 70/100 (Table 1, sample 5 and 6) binder were carried out as follows:
120 g of the respective asphalt binder was heated to 150 °C under air by placing the sample in the preheated oven. 1.8 g (1.5 wt.% referred to the employed amount of asphalt binder) or 6 g (5.0 wt.% referred to the employed amount of asphalt binder) of either As20 or the Isocyanate-plasticizer mixture (= 3 : 7 mixture by weight of As20 : Hexamoll^{®} DINCH) was added to the melted asphalt binder (see Table 1). The subsequently obtained mixture is stirred for a few seconds (< 10 s) to achieve homogeneity. Thereafter, the samples were split into 35 g +/- 0.5 g portions to carry out the rolling thin film oven test for the short-term aging. The test simulates the aging of asphalt during the mixing process, followed by the transportation of the asphalt mix composition to the construction site until the laydown of the asphalt mix. After aging, the modified asphalt is stored at room temperature or employed for further tests as follows: determination of the softening point / BTSV temperature (*T*_{BTSV} / °C; may alternatively be used instead of the softening point), BTSV phase angle (*δ*_{BTSV} / °), and viscosity (@150 °C) (see Table 1).

**Table 1. Viscosity, T_{BTSV} and δ_{BTSV} determined for different asphalt binders.**

| **Sample** | | **1** | **2** | **3** | **4** | **5** | **6** |
|---|---|---|---|---|---|---|---|
| **Asphalt binder blend** | **Asphalt binder 1** | 50/70 | 50/70 | 50/70 aged* | 75 wt.% 50/70 aged* | 75 wt.% 50/70 aged* | 75 wt.% 50/70 aged* |
| | **Asphalt binder 2** | - | - | - | 25 wt.% 70/100 unaged | 25 wt.% 70/100 unaged | 25 wt.% 70/100 unaged |
| **As20 additive** / **wt.%** | | - | 1.5 | - | | 1.5 | - |
| **As20-DINCH mixture / wt.% (As20 / wt.% / Hexamoll@-DINCH / wt.%)** | | - | - | - | | | 5.0 (1.5 / 3.5) |
| | | | | | | | |
| **Viscosity@150 °C / mPas** | | 239 | 550 | 673 | 650 | 1753 | 689 |
| **Softening point "ring and ball method" / °C** | | 49.6 | 60.8 | 66.7 | 65.6 | 77.6 | 62.2 |
| ***T*_{BTSV} / °C** | | 49.6 | 60.4 | 66.1 | 65.9 | 74.7 | 61.5 |
| ***δ*_{BTSV} / °** | | 82.0 | 76.8 | 77.4 | 76.2 | 67.3 | 68.7 |

| | | | | | | | |
|---|---|---|---|---|---|---|---|
| *long-term aged asphalt binder prepared by four subsequent RTFOT aging runs (see above) | | | | | | | |

The workability of an asphalt mix composition is directly linked to the viscosity of the asphalt binder i.e. highly viscous asphalt binders cause compaction issues during asphalt mix laydown. It is known to the art that the aging of asphalt binders leads to an increase of both the binder viscosity and the softening point / BTSV temperature. This in turn means on the one hand that asphalt mix compositions containing a high ratio of aged binder, i.e. a high ratio of reclaimed asphalt pavement (RAP), are more difficult to compact / process. On the other hand, an increase of the softening point / BTSV temperature means that the asphalt mix is getting harder i.e. the stability at higher temperatures is increased. When looking at the BTSV phase angle of asphalt binders, lower phase angles reflect better properties in terms of flexibility / elasticity / less brittleness of the asphalt mix and thus better performance. Typically, BTSV phase angles lower than 75° are characteristic for modified asphalt (e.g. polymer modified bitumen; see "Modifzierung bestimmen", M. Sutor-Fiedler, Asphalt & Bitumen 05/2017).

As can be seen in Table 1, the modification of an unaged asphalt binder 50/70 with As20 leads to an increase both in viscosity and softening point / BTSV temperature. Moreover, the phase angle is decreased. Accordingly, a better performance of a respective asphalt mix compositions containing such a binder can be expected.

Long-term aging of an unmodified asphalt binder 50/70 (sample 3) leads a strong increase of viscosity and, in particular, softening point / BTSV temperature. To counteract, unmodified softer asphalt binder as for example a pen 70/100 can be added which is demonstrated by sample 4. The 75:25 ratio by weight is typical of an asphalt mix composition containing 75% RAP. Such mixtures are for example used for subbase layers.

When modifying a 75:25 mixture (by weight) of a long-term aged 50/70 binder and an unaged (neat) 70/100 binder (sample 5), viscosity and softening point / BTSV temperature expectedly increase and BTSV phase angle decreases. The viscosity of the accordingly modified binder is in the range of polymer modified bitumen. Due to the high viscosity, compaction issues with asphalt mixes containing such an asphalt binder can be expected. It was surprisingly found that by employing a combination of a thermosetting reactive compound (As20) with a plasticizer (Hexamoll^{®} DINCH), the viscosity and the softening point / BTSV temperature of the asphalt binder can be reduced significantly i.e. improving the workability of a corresponding asphalt mix (sample 6). Additionally, the phase angle is not influenced negatively, i.e. the phase angle increases only slightly when compared with sample 5. Interestingly, the achieved BTSV performance characteristics is typical of a polymer modified bitumen (e.g. PmB 25/55-55). Consequently, an asphalt mix composition containing a binder according to the example, the performance is expected to be boosted strongly and a good workability of the asphalt mix is obtained at the same time while a high ratio of reclaimed asphalt pavement material can be realized for the pavement.

Additional benefits are for example: reduction of the laydown temperatures due to the lowered viscosity and thereby lower bitumen emissions (bitumen vapors and aerosols), increase of the RAP content of pavement layers where the use of RAP is limited (e.g. base layers where only 50 wt.% RAP is allowed in combination with polymer modified bitumen), employ RAP material where the softening point of the binder is very high (i.e. less limitation in terms of the age of RAP material), reduce dimension of subbase layer due to increased stability and thereby save costs and raw materials and reduce CO₂ emissions.

### b) Asphalt mix composition tests

Abovementioned asphalt binder tests with ideal mixtures of unaged and aged asphalt binders already demonstrate the advantages of the As20-DINCH mixture (additive according to the invention). However, ideal binder blends do not represent real-life conditions being present in asphalt mix compositions. There, aged asphalt contained in RAP material adheres to aggregates and is not entirely and homogeneously mixed with unaged (neat) asphalt binder which is added during the mixing process. Moreover, asphalt performance data does not always mirror asphalt mix performances. Therefore, asphalt mix composition tests with / without (w/o) / with reference additive were carried out. The reference additive is a state-of-the art rejuvenator which is used to reduce the softening point of RAP material, restore material properties and thereby enable the use of higher amounts of RAP.

Procedure for the preparation of asphalt mix compositions

For each of the four samples listed in Table 2, two batches with a total mass of 40 kg (=aggregates + RAP material; asphalt binder and additive come on top, see Table 2) per batch were prepared. In case of example 1 and comparative example 1, the asphalt binder 70/100 was premixed with the As20-DINCH mixture (additive according to the invention) and reference additive, respectively. The batch size of each of the pre-mixes was 1200 g and prepared as follows: i) asphalt binder 70/100 was melted by heating it to 130-150 °C, ii) 972 g melted asphalt binder was weighted into a separate can, iii) 228 g of the additive according to the invention (3:7 mixture of As20 : Hexamoll^{®} DINCH) or the reference additive was added to the melted asphalt binder at 130-150 °C under stirring, iv) stirring was carried out for less than 1 minute to achieve homogeneity, v) the as-prepared pre-mix was thereafter immediately used for the preparation of corresponding asphalt mix compositions. The employed reference additive is a commonly used and commercially available rejuvenator which reduces the softening point of asphalt binders in RAP-containing asphalt mix compositions and the viscosity of respective asphalt mix compositions in order to provide a good workability of the mix during laydown.

Aggregates, RAP, asphalt binder / asphalt binder additive premix were weighed for each asphalt mix composition as given in Table 2 and subsequently stirred in a laboratory mixer (allows a maximum batch size of 70 kg) for 10 min at 170 °C. Aggregate sieve fractions, total asphalt binder and RAP content correspond to an AC 22 TS pavement layer. The asphalt content of RAP material was 3.8 wt.%. The additive amount of 5 wt.% refers to the total asphalt content (asphalt from RAP + unaged (neat) asphalt) of the unmodified variant (see reference 2: 1140 g binder from RAP + 404 g neat binder 70/100). In order to keep the volume of the modified binder approximately constant (example 1 and comparative example 1), the amount of neat binder is reduced by the amount of the additive (i.e. 76 g less when compared with reference 2).

After mixing, 20 kg portions of the prepared asphalt mix compositions were filled into buckets and stored for one hour at 150 °C in an oven (preheated to 150 °C before samples were placed inside). After storage, Marshall specimens were prepared for compactability tests. Moreover, two asphalt mix plates were prepared for cyclic compression tests (CCT) and low temperature tests (LTT). Asphalt binder characteristics (*T*_{BTSV}, *δ*_{BTSV}, BBR) were determined from recovered asphalt binders of the corresponding asphalt mix compositions (see description for recovery process above). Results of asphalt binder and asphalt mix tests are compiled in Table 3.

**Table 2. Recipes for different asphalt mix compositions. Aggregate sieve fractions, total asphalt binder and RAP content correspond to an AC 22 TS pavement layer. The additive amount of 5 wt.% refers to the total content of asphalt (asphalt from RAP + unaged (neat) asphalt) of the unmodified variant as given for reference 2. The asphalt content of RAP material was 3.8 wt.%.**

| **Sample:** | | 50 wt.% RAP w/o additive | | 75 wt.% RAP w/o additive | | 75 wt.% RAP + 5 wt.% As20-DINCH mix-ture | | 75 wt.% RAP + 5 wt.% reference additive | |
|---|---|---|---|---|---|---|---|---|---|
| | | **Reference 1** | | **Reference 2** | | **Example 1** | | **comparative Example 1** | |
| Grain size | Type | Content [%] | Mass [g] | Content [%] | Mass [g] | Content [%] | Mas s [g] | Content [%] | Mass [g] |
| RAP 22 0/16 | - | 50 | 2000 0 | 75 | 3000 0 | 75 | 3000 0 | 75 | 30000 |
| 16/22 | Grey-wacke | - | - | 9 | 3600 | 9 | 3600 | 9 | 3600 |
| 5/22 | Grey-wacke | 22 | 8800 | 3 | 1200 | 3 | 1200 | 3 | 1200 |
| 2/5 | Grey-wacke | 8 | 3200 | - | - | - | - | - | - |
| 0/1 | Sand | 8 | 3200 | 5 | 2000 | 5 | 2000 | 5 | 2000 |
| 0/2 | Limestone | 9,5 | 3800 | 8 | 3200 | 8 | 3200 | 8 | 3200 |
| Filler | Limestone | 2,5 | 1000 | - | - | - | - | - | - |
| 70/100 | Asphalt | 1.9 | 775 | 1.0 | 404 | 0.81 | 328 | 0.81 | 328 |
| As20-DINCH mixture | | - | - | - | - | 0.19 | 76 | - | - |
| Reference additive | | - | - | - | - | - | - | 0.19 | 76 |

**Table 3. Asphalt binder and asphalt mix performance characteristics of prepared asphalt mix compositions (cf. Table 2).**

| **Sample:** | 50 wt.% RAP w/o Additive | 75 wt.% RAP w/o Additive | 75 wt.% RAP + 5 wt. % As20-DINCH mix-ture | 75 wt.% RAP + 5 wt.% reference additive |
|---|---|---|---|---|
| | **Reference 1a** | **Reference 1b** | **Example 1** | **comparative Example 1** |
| **Asphalt binder tests carried out with recovered asphalt binder** (recovery process see above) | | | | |
| BTSV temperature *T*_{BTSV} / °C | 65.1 | 69.3 | 67.8 | 60.2 |
| BTSV phase angle *δ*_{BTSV} / ° | 72.6 | 72.0 | 68.0 | 72.7 |
| Low temperature behavior: stiffness at 300 MPa via BBR method / °C | -16.8 | -15.9 | -18.6 | -21.3 |
| Low temperature behavior: (m-value at 0.3) via BBR method / °C | -17.5 | -14.6 | -19.8 | -22.4 |

| **Asphalt mix composition tests** | | | | |
|---|---|---|---|---|
| Compactability [21 Nm] at 140°C | 37.5 | 35.1 | 35.1 | 36.5 |
| Compactability [21 Nm] at 115°C | 38.1 | 42.7 | 41.6 | 44.4 |
| Compactability [21 Nm] at 100°C | 43.3 | 48.0 | 44.4 | 46.8 |
| Cyclic Compression Test (CCT) Inflection point / cycles | 3616 | 4619 | 10000 | 4178 |
| Cyclic Compression Test (CCT) deformation rate at inflection point / ‰ | 11.5 | 1.6 | 1.6 | 2.9 |
| Low Temperature Tests Tensile strength / MPa | 4.25 | 4.17 | 5.20 | 4.26 |
| Low Temperature Tests break temperature / °C | -25.4 | -22.6 | -26.5 | -28.0 |

### Asphalt binder performance

As can be seen in Table 3, the softening point / BTSV temperature of the asphalt binder increases for asphalt mix compositions if the ratio of RAP is increased (compare reference 1a and 1b). Moreover, the low temperature behavior gets worse as expected (stiffness of 300 MPa or m-value of 0.3 reached at higher temperatures).

When employing the As20-DINCH mixture (5 wt.%) for an asphalt mix composition containing 75 wt.% RAP (example 1), the softening point / BTSV temperature can be decreased from 69.3 °C to 67.8 °C. Additionally, the BTSV phase angle is strongly decreased from 72.0° to 68.0° and the low temperature behavior is improved markedly (stiffness of 300 MPa or m-value of 0.3 reached at lower temperatures when compared with reference 1b). Due to the lower BTSV phase angle, much better properties in terms of flexibility / elasticity / less brittleness of the asphalt mix and thus better performance is expected.

The reference additive (comparative example 1) decreases the softening point / BTSV temperature of the asphalt binder strongly from 69.3 °C to 60.2 °C. The BTSV phase angle is increased slightly i.e. the performance of the corresponding asphalt mix composition is expected to be worse, not even being at the same level of the unmodified variant (reference 1b).

### Asphalt mix performance

Asphalt mix compositions tests are in line with findings from asphalt binder tests. The following conclusions can be drawn:
- The additive according to the invention (As20-DINCH mixture) outperforms the reference additive in terms of deformation behavior (determined by CCT) of the respective asphalt mix composition. The deformation behavior of the asphalt mix composition containing the reference additive is even worse than the reference without additive. This is in line with findings from binder investigations.
- The low temperature behavior of example 1 and comparative example 1 is almost at the same level, both outperform the reference example without additive.
- Due to the viscosity decrease of the asphalt binder (see findings from asphalt binder tests), the additive according to the invention (As20-DINCH mixture) enables a better compactability at low temperatures when compared with reference 1b and comparative example 1 (see Table 3, 115 °C and 100 °C; lower values correlate with a better compactability of the asphalt mix composition). Therefore, the workability of the mix is improved by the additive according to the invention (As20-DINCH mixture). Moreover, a temperature reduction at asphalt mix production and laydown is enabled.

### c) Experiments at an (batch) asphalt mixing plant

Results from laboratory investigations were transferred to real scale by carrying out experiments at an (batch) asphalt mixing plant as described in the following.

### Preparation of an asphalt mix composition containing 50 wt.% RAP in an (batch) asphalt mixing plant - no additive is used (comparative Example 2)

The batch size is 3500 kg. The granulometric curve of the asphalt mix composition was an AC 22 BS. The asphalt mix comprises 50 wt.% reclaimed asphalt (aggregates + asphalt) and 50 wt.% virgin material. The total asphalt content in the mixture of asphalt and aggregates was 4.5 wt.%, i.e. 157.5 kg asphalt per 3500 kg batch. 84 kg of 157.5 kg asphalt originate from reclaimed asphalt (4.8 wt.%) and the remaining 73.5 kg stem from the addition of unmodified (paving grade) asphalt pen 70/100 (a needle penetration of 7-10 mm according to DIN EN 1426). The grain size distribution was adjusted as given in Table 4 whereat the bypass describes the mixture of virgin granular material (without filler) complying with an AC 22 BS pavement layer and being adjusted manually by the plant operator. The analysis of sieve fractions and binder content after asphalt mix production is given in Table 5.

Virgin granular material and reclaimed asphalt were preheated separately from each other and subsequently mixed together for 6 s (pre-mix). Heating power and mixing time were adjusted such that a temperature of 140-155 °C of the final asphalt mix composition can be achieved. 73.5 kg unmodified (paving grade) asphalt pen 70/100 being preheated to a temperature of 165-175°C was weighed into the asphalt balance. The asphalt together with the premixed material (mixture of virgin aggregates and reclaimed asphalt having a temperature of ≤170 °C) were added to the mixing unit (double shaft compulsory mixer) and the resulting mixture is further mixed, wherein the total duration of further mixing is 30 s. The temperature of the resulting final asphalt mix composition at this stage of the process was determined to be 145-150 °C. Subsequently, the asphalt mix composition was released to the silo and then directly into a wheel loader (i.e. no storage time). Subsequently, samples were taken for asphalt binder tests (carried out after asphalt binder recovery as described above) and asphalt mix composition tests (Table 6).

### Preparation of an asphalt mix composition containing 50 wt.% RAP in an (batch) asphalt mixing plant - 5 wt.% As20-DINCH mixture (additive according to the invention) is employed (Example 2)

The asphalt mixing plant was equipped with a customized dosing system (heatable dosing line, dosing pump) which allows the dosage of the additive according to the invention (3:7 mixture of As20 : Hexamoll^{®} DINCH) to the asphalt balance (stirred vessel) of the asphalt mixing plant. Furthermore, the asphalt balance was equipped with a stirrer which is engaged when i) the As20-DINCH mixture is dosed and ii) a minimum filling level of 20 kg asphalt is reached. The amount and speed of additive dosage as well as mixing is controlled via the process control system of the asphalt mixing plant.

The batch size is 3500 kg. The granulometric curve of the asphalt mix composition was an AC 22 BS. The asphalt mix comprises 50 wt.% reclaimed asphalt (aggregates + asphalt) and 50 wt.% virgin material. The total asphalt content (including the additive, since it is modifying the binder) in the mixture of asphalt and aggregates was 4.5 wt.%, i.e. 157.5 kg (modified) asphalt per 3500 kg batch. 84 kg of 157.5 kg asphalt originate from reclaimed asphalt (4.8 wt.%), 65.5 kg stem from the addition of unmodified (paving grade) asphalt pen 70/100 (a needle penetration of 7-10 mm according to DIN EN 1426), and 8.0 kg As20-DINCH mixture were added. The amount of additive was calculated on the basis of the unmodified variant given in comparative example 2, i.e. 5.0 wt.% with respect to the total (unmodified) binder (= asphalt stemming from reclaimed asphalt + added unmodified (paving grade) asphalt pen 70/100 = 157.5 kg). In order to keep the volume of the modified binder of example 2 approximately constant, the amount of neat binder is reduced by the amount of the As20-DINCH mixture i.e. 8.0 kg less when compared with comparative example 2.

The grain size distribution was adjusted as given in Table 4 whereat the bypass describes the mixture of virgin granular material (without filler) complying with an AC 22 BS pavement layer and being adjusted manually by the plant operator. The analysis of sieve fractions and binder content after asphalt mix production is given in Table 5.

Virgin granular material and reclaimed asphalt were preheated separately from each other and subsequently mixed together for 6 s (pre-mix). Heating power and mixing time were adjusted such that a temperature of 140-155 °C of the final asphalt mix composition can be achieved. 65.5 kg unmodified (paving grade) asphalt pen 70/100 being preheated to a temperature of 165-175°C was weighed into the stirring vessel (=asphalt balance). 8.0 kg of the As20-DINCH mixture is then added to the asphalt under stirring (1500 rpm) and the resulting mixture is then further stirred, wherein the dosage speed is set between 0.1 L/s and 2.0 L/s and the time of further stirring is set to 10 s. The resulting modified asphalt together with the premixed material (mixture of virgin aggregates and reclaimed asphalt having a temperature of ≤170 °C) were added to the mixing unit (double shaft compulsory mixer) and the resulting mixture is further mixed, wherein the total duration of further mixing is 30 s. The temperature of the resulting final asphalt mix composition at this stage of the process was determined to be 145-150 °C. Subsequently, the asphalt mix composition was released to the silo and then directly into a wheel loader (i.e. no storage time). Subsequently, samples were taken for asphalt binder tests (carried out after asphalt binder recovery as described above) and asphalt mix composition tests (Table 6).

**Table 4. Asphalt mix compositions prepared in a (batch) asphalt mixing plant with and w/o additive according to the invention (3:7 mixture of As20 : Hexamoll^{®} DINCH).**

| **Sample:** | | 50 wt.% RAP w/o As20-DINCH mixture | | 50 wt.% RAP 5 wt.% As20-DINCH mixture | |
|---|---|---|---|---|---|
| | | **Reference 2** | | **Example 2** | |
| Grain size | Type | kg / t asphalt mix | % | kg / t asphalt mix | % |
| RAP 22 0/16 | | 500 | 50 | 500 | 49.9 |
| Bypass | Grey-wacke | 474 | 47.4 | 476 | 47.5 |
| Filler | Lime-stone | 5 | 0.5 | 5 | 0.5 |
| 70/100 | Asphalt binder | 21 | 2.1 | 18,7 | 1.9 |
| As20-DINCH mixture | | - | - | 2,3 | 0.2 |

**Table 5. Sieve fraction analysis and asphalt binder content of prepared asphalt mix compositions.**

| 50 wt.% RAP | | 50 wt.% RAP | |
|---|---|---|---|
| w/o As20-DINCH mixture | | 5 wt.% As20-DINCH mixture | |
| **Reference 2** | | **Example 2** | |
| Grain size classes | Asphalt mix | Grain size classes | Asphalt mix |
| mm | wt.% | mm | wt.% |
| 22.4 - 31.5 | 1.5 | 22.4 - 31.5 | 3.5 |
| 16.0 - 22.4 | 20.4 | 16.0 - 22.4 | 20.7 |
| 11.2 - 16.0 | 22.1 | 11.2 - 16.0 | 21.1 |
| 8.0 - 11.2 | 8.5 | 8.0 - 11.2 | 8.1 |
| 5.6 - 8.0 | 10.7 | 5.6 - 8.0 | 7.8 |
| 2.0 - 5.6 | 16.5 | 2.0 - 5.6 | 16.1 |
| 0.125 - 2.0 | 12.2 | 0.125 - 2.0 | 14.7 |
| 0.063 - 0.125 | 0.9 | 0.063 - 0.125 | 0.8 |
| <0.063 | 7.4 | <0.063 | 7.1 |
| | | | |
| Asphalt binder | 4.4 | Asphalt binder | 4.1 |

**Table 6. Asphalt mix compositions tests and asphalt binder tests carried out with samples produced in a (batch) asphalt mixing plant with and w/o additive according to the invention (3:7 mixture of As20 : Hexamoll^{®} DINCH).**

| **Sample:** | 50 wt.% RAP | 50 wt.% RAP |
|---|---|---|
| | w/o As20-DINCH mixture | 5 wt.% As20-DINCH mixture |
| | **Reference 2** | **Example 2** |
| **Asphalt binder tests carried out with recovered asphalt binder** (recovery process see above) | | |
| BTSV temperature *T*_{BTSV} / °C | 54.6 | 61.7 |
| BTSV phase angle *δ*_{BTSV} / ° | 75.9 | 66.5 |
| Recovery at 3,2 kPa / % via MSCR test | 3.6 | 34.4 |
| *J*ₙᵣ at 3,2kPa / 1/kPa via MSCR test | 1.55 | 0.26 |
| Low temperature behavior: stiffness at 300 MPa via BBR method / °C | -8.4 | -5.7 |
| Low temperature behavior: (m-value at 0,3) via BBR method / °C | -15.4 | -15.6 |

| **Asphalt mix composition tests** | | |
|---|---|---|
| Asphalt content / % | 4.3 | 4.1 |
| Air void content / % | 5.7 | 5.1 |
| Hamburg Wheel Test rutting depth / mm | 3.67 | 2.23 |
| Compactability [21 Nm] at 100°C | 48.8 | 43.5 |
| Cyclic Compression Test (CCT) inflection point / cycles | 3590 | 8854 |
| Cyclic Compression Test (CCT) deformation rate at inflection point / ‰ | 4.8 | 0.1 |
| Low Temperature Tests tensile strength / MPa | 4.2 | 2.9 |
| Low Temperature Tests break temperature / °C | -26.4 | -31.2 |

### Asphalt binder performance

When employing the additive according to the invention (As20-DINCH mixture) for an asphalt mix composition containing 50 wt.% RAP (example 2) at an asphalt mixing plant, the BTSV temperature is increased from 54.6 °C to 61.7 °C (Table 6). Accordingly, comparably low softening points are increased leading to a better asphalt mix stability at high temperatures (example 2), and quite high softening points (see example 1 and reference 1b above) are decreased leading a softer material. Additionally, the BTSV phase angle is strongly decreased from 75.9° to 66.5° and the low temperature behavior remains on a similar level (cf. reference 2). Due to the lower BTSV phase angle, better properties in terms of flexibility / elasticity / less brittleness of the asphalt mix and thus better performance is expected. Moreover, the *J*ₙᵣ value (via MSCR test) was decreased from 1.55 1/kPa to 0.26 1/kPa, i.e. the binder is then specified for extreme traffic load (>30 million ESALs and standing traffic for *J*ₙᵣ < 0.5; 1 ESAL(Equivalent Single Axle Load) = 80 kN) instead of only heavy load (10-30 million ESALs or slow-moving traffic for *J*ₙᵣ < 2) as applies for comparative example 2.

### Asphalt mix performance

As can be seen from asphalt mix performance tests (Hamburg wheel tracking test, compactability, CCT, LTT), the according to the invention (As20-DINCH mixture) markedly outperforms the comparative example (Table 6): better compactability / workability of the mix, better rutting and fatigue behavior, better low temperature performance. This is in line with findings from asphalt binder tests described before. Interestingly, in contrast to asphalt binder tests, the low temperature behavior as determined from asphalt mix low temperature tests (LTT) could even be improved since the break temperature was decreased from -26.4 °C to -31.2 °C.

Concluding, both asphalt binder tests and asphalt mix composition tests confirm findings from laboratory investigations on industrial scale and demonstrate the performance and advantages of the additive according to the invention (As20-DINCH mixture).

## Claims

1. An asphalt composition comprising 0.1 to 8 wt.-% based on the total weight of the composition of an Isocyanate as thermosetting reactive compound and 0.1 to 8 wt.-% based on the total weight of the composition of a plasticizer selected from the group consisting of orthophthalates, terephthalates, cyclohexanoates, alkylsulfonates, adipates, , and citrates, or mixtures thereof.

2. The asphalt composition according to claim 1, wherein the isocyanate has a functionality of at least 2.0.

3. The asphalt composition according to anyone of claims 1 to 2, wherein the isocyanate is selected from the group consisting of monomeric MDI, polymeric MDI, MDI prepolymers, TDI and HDI.

4. The asphalt composition according to anyone of claims 1 to 3, wherein the isocyanate is polymeric MDI.

5. The asphalt composition according to claim 4, wherein the polymeric MDI has a viscosity in the range of from 10 to 5000 cps/mpas at 25°C

6. The asphalt composition according to anyone of claims 4 to 5, wherein the amount of polymeric MDI is of from 0.5 to 5.0 wt.-% based on the total weight of the composition.

7. The asphalt composition according to anyone of claims 1 to 6, wherein the plasticizer is selected from the group consisting of Diisononyl phthalate, Diisodecyl phthalate, Bis(2-propylheptyl)phthalate, Bis(2-ethylhexyl)phthalate, Bis(2-ethylhexyl)terephthalate, Dibutyl phthalate, Diisobutyl phthalate, Benzylbutyl phthalate, Diisobutyl terephthalate, Diisononyl 1,2-cyclohexanedicarboxylic acid and (C10-C21)-Alkylsulfonic acid ester of phenol or mixtures thereof.

8. The asphalt composition according to anyone of claims 1 to 7, wherein the plasticizer is selected from the group consisting of Bis(2-ethylhexyl)terephthalate, (C10-C21)-Alkylsulfonic acid ester of phenol and Diisononyl 1,2-cyclohexanedicarboxylic acid or mixtures thereof.

9. The asphalt composition according to anyone of claims 1 to 8, wherein the amount of plasticizer is of from 0.5 to 5.0 wt.-% based on the total weight of the composition.

10. The asphalt composition according to anyone of claims 1 to 9, wherein the ratio of an isocyanate as thermosetting reactive compound to plasticizer is in the range of from 80:1 to 1:80.

11. A process for the preparation of an asphalt composition according to claims 1 to 10 comprising the following steps:
a) Heating up the starting asphalt to a temperature of from 110 to 190°C
b) Adding the desired amount of isocyanate and the respective plasticizer in the desired amount, wherein the order of adding the desired additives is not decisive or the respective isocyanate and the respective plasticizer are separately mixed and added as mixture.
c) After step b) the reaction mixture is stirred for at least 2 h at a temperature in the range of from 110 to 190°C or homogenized for a duration in the range of from 2 to 180 s and optionally
d) the end of the reaction is determined by IR spectroscopy,
wherein the reaction is under an oxygen atmosphere.

12. A process according to claim 11, wherein the temperature in step a) and step c) are the same and in the range of from 110 to 165°C.

13. Use of the asphalt composition according to claim 1 to 10 for the preparation of an asphalt mix composition.

14. Use of the asphalt composition according to claim 13, wherein the granular material for the asphalt mix composition comprises of from 5 to 100 weight-% of reclaimed asphalt pavement.

15. Use of the asphalt composition according to claims 13 or 14 for pavement applications.

## Patentansprüche

1. Asphaltzusammensetzung, umfassend zu 0,1 bis 8 Gew.-%, bezogen auf das Gesamtgewicht der Zusammensetzung, ein Isocyanat als wärmehärtende reaktive Verbindung und zu 0,1 bis 8 Gew.-%, bezogen auf das Gesamtgewicht der Zusammensetzung, einen Weichmacher, der ausgewählt ist aus der Gruppe bestehend aus Orthophthalaten, Terephthalaten, Cyclohexanoaten, Alkylsulfonaten, Adipaten und Citraten oder Gemischen davon.

2. Asphaltzusammensetzung nach Anspruch 1, wobei das Isocyanat eine Funktionalität von mindestens 2,0 aufweist.

3. Asphaltzusammensetzung nach einem der Ansprüche 1 bis 2, wobei das Isocyanat ausgewählt ist aus der Gruppe bestehend aus monomerem MDI, polymerem MDI, MDI-Prepolymeren, TDI und HDI.

4. Asphaltzusammensetzung nach einem der Ansprüche 1 bis 3, wobei das Isocyanat polymeres MDI ist.

5. Asphaltzusammensetzung nach Anspruch 4, wobei das polymere MDI eine Viskosität im Bereich von 10 bis 5000 cps/mpas bei 25 °C aufweist.

6. Asphaltzusammensetzung nach einem der Ansprüche 4 bis 5, wobei die Menge an polymerem MDI bei 0,5 bis 5,0 Gew.-%, bezogen auf das Gesamtgewicht der Zusammensetzung, liegt.

7. Asphaltzusammensetzung nach einem der Ansprüche 1 bis 6, wobei der Weichmacher ausgewählt ist aus der Gruppe bestehend aus Diisononylphthalat, Diisodecylphthalat, Bis(2-propylheptyl)phthalat, Bis(2-ethylhexyl)phthalat, Bis(2-ethylhexyl)terephthalat, Dibutylphthalat, Diisobutylphthalat, Benzylbutylphthalat, Diisobutylterephthalat, Diisononyl-1,2-cyclohexandicarbonsäure und (C10-C21)-Alkylsulfonsäureester von Phenol oder Gemischen davon.

8. Asphaltzusammensetzung nach einem der Ansprüche 1 bis 7, wobei der Weichmacher ausgewählt ist aus der Gruppe bestehend aus Bis(2-ethylhexyl)terephthalat, (C10-C21)-Alkyl-sulfonsäureester von Phenol und Diisononyl-1,2-cyclohexandicarbonsäure oder Gemischen davon.

9. Asphaltzusammensetzung nach einem der Ansprüche 1 bis 8, wobei die Menge an Weichmacher bei 0,5 bis 5,0 Gew.-%, bezogen auf das Gesamtgewicht der Zusammensetzung, liegt.

10. Asphaltzusammensetzung nach einem der Ansprüche 1 bis 9, wobei das Verhältnis eines Isocyanats als wärmehärtende reaktive Verbindung zu dem Weichmacher im Bereich von 80 : 1 bis 1 : 80 liegt.

11. Verfahren zur Herstellung einer Asphaltzusammensetzung nach Anspruch 1 bis 10, umfassend die folgenden Schritte:
a) Erwärmen des Ausgangsasphalts auf eine Temperatur von 110 bis 190 °C
b) Zugeben der gewünschten Menge Isocyanat und des jeweiligen Weichmachers in der gewünschten Menge, wobei die Reihenfolge des Zugebens der gewünschten Additive nicht entscheidend ist oder das jeweilige Isocyanat und der jeweilige Weichmacher getrennt gemischt und als Gemisch zugegeben werden.
c) Nach Schritt b) wird das Reaktionsgemisch mindestens 2 h lang bei einer Temperatur im Bereich von 110 bis 190 °C gerührt oder für eine Dauer im Bereich von 2 bis 180 s homogenisiert und gegebenenfalls
d) wird das Ende der Reaktion mittels IR-Spektroskopie bestimmt,
wobei die Reaktion unter einer Sauerstoffatmosphäre durchgeführt wird.

12. Verfahren nach Anspruch 11, wobei die Temperatur in Schritt a) und Schritt c) gleich ist und im Bereich von 110 bis 165 °C liegt.

13. Verwendung der Asphaltzusammensetzung nach Anspruch 1 bis 10 zur Herstellung einer Asphaltmischungszusammensetzung.

14. Verwendung der Asphaltzusammensetzung nach Anspruch 13, wobei das granulare Material für die Asphaltmischungszusammensetzung zu 5 bis 100 Gew.-% zurückgewonnenen Asphaltbelag umfasst.

15. Verwendung der Asphaltzusammensetzung nach Anspruch 13 oder 14 für Straßenbelaganwendungen.

## Revendications

1. Composition d'asphalte comprenant 0,1 à 8 % en poids, par rapport au poids total de la composition, d'un isocyanate comme composé réactif thermodurcissable et 0,1 à 8 % en poids, par rapport au poids total de la composition, d'un plastifiant choisi dans le groupe constitué par les orthophtalates, les téréphtalates, les cyclohexanoates, les alkylsulfonates, les adipates, et les citrates ou leurs mélanges.

2. Composition d'asphalte selon la revendication 1, dans laquelle l'isocyanate a une fonctionnalité d'au moins 2,0.

3. Composition d'asphalte selon l'une quelconque des revendications 1 à 2, dans laquelle l'isocyanate est choisi dans le groupe constitué par le MDI monomérique, le MDI polymérique, les prépolymères de MDI, le TDI et le HDI.

4. Composition d'asphalte selon l'une quelconque des revendications 1 à 3, dans laquelle l'isocyanate est le MDI polymérique.

5. Composition d'asphalte selon la revendication 4, dans laquelle le MDI polymérique a une viscosité dans la plage de 10 à 5 000 cps/mpas à 25 °C.

6. Composition d'asphalte selon l'une quelconque des revendications 4 à 5, dans laquelle la quantité de MDI polymérique est de 0,5 à 5,0 % en poids par rapport au poids total de la composition.

7. Composition d'asphalte selon l'une quelconque des revendications 1 à 6, dans laquelle le plastifiant est choisi dans le groupe constitué par le phtalate de diisononyle, le phtalate de diisodécyle, le phtalate de bis (2-propylheptyle), le phtalate de bis(2-éthylhexyle), le téréphtalate de bis(2-éthylhexyle), le phtalate de dibutyle, le phtalate de diisobutyle, le phtalate de benzylbutyle, le téréphtalate de diisobutyle, l'acide diisononyl-1,2-cyclohexanedicarboxylique et un ester d'acide (C10-C21)-alkylsulfonique de phénol ou leurs mélanges.

8. Composition d'asphalte selon l'une quelconque des revendications 1 à 7, dans laquelle le plastifiant est choisi dans le groupe constitué par le téréphtalate de bis(2-éthylhexyle), un ester d'acide (C10-C21)-alkylsulfonique de phénol et l'acide diisononyl-1,2-cyclohexanedicarboxylique ou leurs mélanges.

9. Composition d'asphalte selon l'une quelconque des revendications 1 à 8, dans laquelle la quantité de plastifiant est de 0,5 à 5,0 % en poids par rapport au poids total de la composition.

10. Composition d'asphalte selon l'une quelconque des revendications 1 à 9, dans laquelle le rapport d'un isocyanate en tant que composé réactif thermodurcissable sur le plastifiant est dans la plage de 80:1 à 1:80.

11. Procédé pour la préparation d'une composition d'asphalte selon les revendications 1 à 10 comprenant les étapes suivantes :
a) chauffage de l'asphalte de départ jusqu'à une température de 110 à 190 °C
b) ajout de la quantité souhaitée d'isocyanate et du plastifiant respectif dans la quantité souhaitée, l'ordre d'ajout des additifs souhaités n'étant pas déterminant ou l'isocyanate respectif et le plastifiant respectif étant mélangés séparément et ajoutés en tant que mélange,
c) après l'étape b), le mélange réactionnel est agité pendant au moins 2 h à une température dans la plage de 110 à 190 °C ou homogénéisé pendant une durée dans la plage de 2 à 180 s et éventuellement
d) la fin de la réaction est déterminée par spectroscopie IR,
dans laquelle la réaction est sous une atmosphère d'oxygène.

12. Procédé selon la revendication 11, dans lequel les températures dans l'étape a) et l'étape c) sont les mêmes et dans la plage de 110 à 165 °C.

13. Utilisation de la composition d'asphalte selon la revendication 1 à 10 pour la préparation d'une composition de mélange d'asphalte.

14. Utilisation de la composition d'asphalte selon la revendication 13, dans laquelle le matériau granulaire pour la composition de mélange d'asphalte comprend de 5 à 100 % en poids de chaussée d'asphalte récupéré.

15. Utilisation de la composition d'asphalte selon la revendication 13 ou 14 pour des applications de chaussée.
